# EUROPEAN PATENT APPLICATION

(11) **EP 4 768 897 A1**
(43) Date of publication of application: **01.07.2026**
(21) Application number: 25866353.3
(22) Date of filing: 05.08.2025
(51) Int. Cl.: G01N 21/88, G06T 7/00, G06T 7/30, H01M 10/42, G06N 20/00

(54) **APPARATUS AND METHOD FOR INSPECTING BATTERY**

(30) Priority: 13.09.2024 KR 20240125276
(71) Applicant: LG Energy Solution, Ltd., Seoul 07335 (KR)
(72) Inventor: CHO, Minkeun, Daejeon 34122 (KR); KIM, Tae Young, Daejeon 34122 (KR); JEON, Hyoseung, Daejeon 34122 (KR)
(74) Representative: Goddar, Heinz J.
(86) International application number: PCT/KR2025/011649
(87) International publication number: WO 2026/059101

(57) **Abstract**

A method for inspecting a battery, according to an embodiment of the present invention, relates to a method for inspecting the quality of a battery in a manufacturing process, the method comprising the steps of: acquiring an image capturing at least a portion of the exterior of the battery to preprocess the image; detecting one or more defect candidate regions in the preprocessed image by using one or more detection algorithms; extracting position information of the defect candidate regions and shape feature information of the defect candidate regions; and inputting, into a pre-trained machine learning model, information related to the detection algorithms, the position information of the defect candidate regions, and the shape feature information of the defect candidate regions, to determine whether corresponding defect candidate shapes are defective.

## Description

### [Technical Field]

This application claims priority to and the benefit of Korean Patent Application No.10-2024-0125276 filed in the Korean Intellectual Property Office on September 13, 2024 the entire contents of which are incorporated herein by reference.

The present invention relates to an apparatus and method for inspecting batteries, and more particularly, to a battery inspection apparatus and method for inspecting quality of batteries in a manufacturing process.

### [Background Art]

Secondary batteries, capable of recharging and reuse, may be used as an energy source for small devices such as mobile phones, tablet PCs and vacuum cleaners, and also used as an energy source for medium and large devices such as personal mobility, automobiles, and an energy storage system (ESS) for smart grids. Secondary batteries are used in assemblies, such as battery modules, where multiple battery cells are connected in series and parallel, or battery packs, where battery modules are connected in series and parallel, depending on system requirements.

Batteries may be manufactured through a series of processes, including electrode manufacturing, assembly, formation, and other processes. The resulting battery cells or the products of each process are inspected for defects using inspection equipment. A commonly used method for defect inspection is visual inspection, which involves capturing images of the product using an optical system and detecting defects using a detection algorithm.

However, this method of inspecting defects using images of the battery's exterior carries the potential risk of misdetection. Furthermore, modifying the inspection algorithm to adjust the detection capability of the inspection equipment requires repeated trials and error corrections with individual changes to variables to verify the results, which incurs significant time and cost losses.

### [Detailed Description of the Invention]

### [Technical Problem]

To obviate one or more problems of the related art, embodiments of the present disclosure provide a battery inspection method for inspecting the quality of batteries during a manufacturing process.

To obviate one or more problems of the related art, embodiments of the present disclosure also provide a battery inspection apparatus using the battery inspection method.

### [Technical Solution]

In order to achieve the objective of the present disclosure, a method for inspecting quality of a battery during a manufacturing process of the battery, may include acquiring and preprocessing an image capturing an appearance of at least a portion of the battery; detecting one or more defect candidate regions from the preprocessed image using one or more detection algorithms; extracting location information of the defect candidate regions and shape feature information of the defect candidate regions; and inputting detection algorithm related information, location information of the defect candidate regions, and shape feature information for the defect candidate regions into a pre-trained machine learning model to perform a defect determination for a corresponding defect candidate shape.

The shape feature information of the defect candidate regions may include one or more of area, length, diameter, defect factor, and circularity of each defect candidate shape.

The detection algorithm related information may include the type of detection algorithm used to detect the defect candidate regions; and information about lighting used when applying the detection algorithm.

The machine learning model may be pre-trained using training data including the detection algorithm related information, location information of the defect candidate regions, and shape feature information of the defect candidate regions.

The shape feature information used as training data may be matched to a label of a defect type for a corresponding shape.

The detection algorithm may be a rule-based algorithm and include one or more of a dent detection algorithm, a contamination detection algorithm, a scratch detection algorithm, and a leak detection algorithm.

The method may further include visualizing and outputting a defect determination flow of the machine learning model; and ranking contributions to the defect determination and visualizing and outputting the defect determination result.

The machine learning model may include one or more of a decision tree model, a random forest model, and a Support Vector Model (SVM).

The information about the lighting may include information about location where the lighting is installed and the type of lighting.

The method may further include performing a final defect determination using area and length of feature information about the defect candidate shape determined as defective by the machine learning model.

According to another embodiment of the present disclosure, an apparatus for inspecting quality of a battery during a manufacturing process of the battery, may include at least one processor; and a memory configured to store at least one instruction executed by the at least one processor, and the at least one instruction may include an instruction to acquire and preprocess an image capturing an appearance of at least a portion of the battery; an instruction to detect one or more defect candidate regions from the preprocessed image using one or more detection algorithms; an instruction to extract location information of the defect candidate regions and shape feature information of the defect candidate regions; and an instruction to input detection algorithm related information, location information of the defect candidate regions, and shape feature information for the defect candidate regions into a pre-trained machine learning model to perform a defect determination for a corresponding defect candidate shape.

The shape feature information of the defect candidate regions may include one or more of area, length, diameter, defect factor, and circularity of each defect candidate shape.

The detection algorithm related information may include the type of detection algorithm used to detect the defect candidate regions; and information about lighting used when applying the detection algorithm.

The machine learning model may be pre-trained using training data including the detection algorithm related information, location information of the defect candidate regions, and shape feature information of the defect candidate regions.

The shape feature information used as training data may be matched to a label of a defect type for a corresponding shape.

The detection algorithm may be a rule-based algorithm and include one or more of a dent detection algorithm, a contamination detection algorithm, a scratch detection algorithm, and a leak detection algorithm.

The at least one instruction may further include an instruction to visualize and output a defect determination flow of the machine learning model; and an instruction to rank contributions to the defect determination and visualizing and outputting the defect determination result.

The machine learning model may include one or more of a decision tree model, a random forest model, and a Support Vector Model (SVM).

The information about the lighting may include information about location where the lighting is installed and the type of lighting.

The at least one instruction may further include an instruction to perform a final defect determination using area and length of feature information about the defect candidate shape determined as defective by the machine learning model.

### [Advantageous Effects]

According to embodiments of the present disclosure, the accuracy of inspection for determining whether a battery being manufactured is defective can be improved. Consequently, misclassification and over-inspection can be reduced, thereby reducing risks for manufacturers.

Furthermore, the visualization of defect determination priorities and models facilitates maintenance of the inspection algorithm, reducing the time and cost associated with modifying the inspection logic.

### [Brief Description of the Drawings]

FIG. 1 is an operational flowchart illustrating a battery inspection method according to embodiments of the present invention.
FIG. 2 is a diagram illustrating a process for detecting a defect candidate region and extracting shape feature information according to embodiments of the present invention.
FIG. 3 illustrates an example of training data for a machine learning model according to embodiments of the present invention.
FIG. 4 illustrates an example of a rule-based algorithm used for defect detection according to embodiments of the present invention.
FIG. 5 illustrates an example of label matching, which matches defect shape information with defect type, according to embodiments of the present invention.
FIG. 6 is a diagram illustrating an example of a defect display method using machine learning among defect detection methods according to embodiments of the present invention.
FIG. 7 is a perspective view of an imaging apparatus according to embodiments of the present invention.
FIG. 8 is a cross-sectional view of the imaging apparatus according to embodiments of the present invention.
FIG. 9a is a drawing illustrating the exterior of an imaging apparatus according to another embodiment of the present invention.
FIG. 9b is a multi-channel lighting configuration diagram of the imaging apparatus according to another embodiment of the present invention.
FIG. 10 is a block diagram of a battery inspection apparatus according to embodiments of the present invention.

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

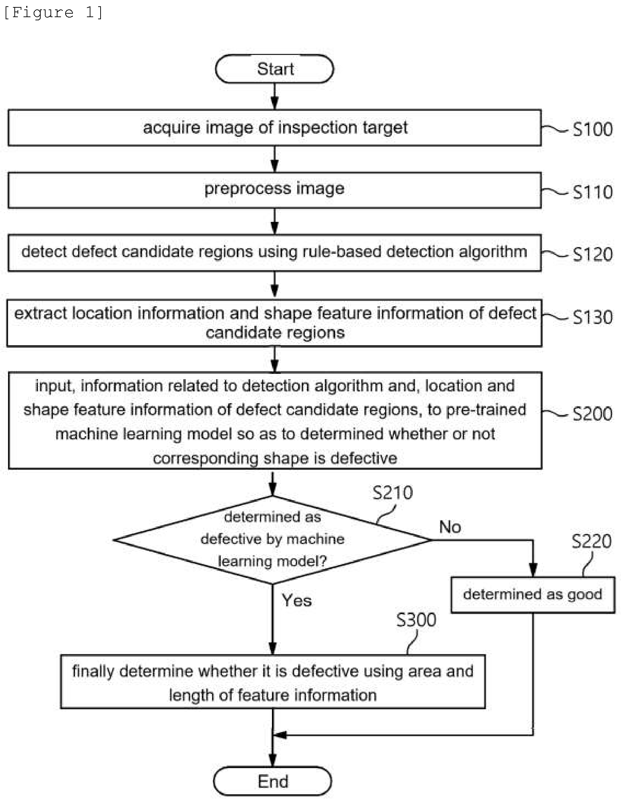

FIG. 1 is an operational flowchart illustrating a battery inspection method according to embodiments of the present invention.

The inspection target according to embodiments of the present invention may be a cylindrical, pouch-shaped, or prismatic battery undergoing a manufacturing process, particularly a cylindrical battery of various specifications. For example, a cylindrical battery may include an electrode assembly, a battery can, a plate-shaped cap, and terminals. The cylindrical battery may additionally include an insulating gasket, a current collector, an insulator, a sealing gasket, and the like.

The appearance inspection method according to embodiments of the present invention may acquire and preprocess an image of the inspection target (S100, S110). An image of at least a portion of the battery being inspected may be acquired using an imaging apparatus, i.e., an optical system and a single image may include a plurality of regions of interests (ROIs).

The image preprocessing process (S110) is a process for emphasizing features of the image of the target object prior to inspection to facilitate inspection. The preprocessing also converts the image acquired through the imaging apparatus into an image that can be easily identified by correcting or synthesizing the image. The image preprocessing process may also include a process of amplifying the overall brightness of the image for the target object. Methods for preprocessing may include image synthesis, binarization, normalization, blurring, and stretching.

Here, the image synthesis utilizes multi-channel images to express depth in the image, which will be discussed later, making it particularly useful for detecting defects such as dents and scratches. Methods for image synthesis such as photometric stereo synthesis and phase shift synthesis may be used.

Furthermore, binarization is a process of resetting pixel values of objects and backgrounds in an image to only the values 1 and 0. Image correction through binarization may be used to improve visibility of defects in a product's appearance. In addition, normalization is a process of distributing pixel values concentrated in specific areas of an image evenly across the entire region. Blur processing, also known as smoothing, may be used to soften rough images or as a preprocessing step to remove the effects of noise in the image. Stretching may also be used as a preprocessing method to compensate for distorted images.

For preprocessed images, a rule-based detection algorithm may be used to detect one or more defect candidate regions (S120), and location information and shape feature information for the detected defect candidate regions may be extracted (S130).

Here, the shape feature information of a defect candidate shape in the defect candidate regions according to embodiments of the present invention may include one or more of the following: area, length, diameter, circularity, degree of ellipticity, and degree of squareness of each defect candidate shape. Furthermore, the location information for the defect candidate regions may include the x- and y-coordinates of each region on the image.

Thereafter, information related to the detection algorithm, the location information for the defect candidate regions, and the shape feature information of the defect candidate regions may be input into a pre-trained machine learning model. Based on the output of the machine learning model, whether or not the corresponding shape is defective may be determined (S200).

The detection algorithm-related information may include the type of detection algorithm used to detect the defect candidate and information about the lighting used when applying the detection algorithm. Here, the detection algorithm may be a rule-based detection algorithm. Rule-based detection algorithms may include dent detection algorithms, contamination detection algorithms, scratch detection algorithms, and leak detection algorithms, which can effectively detect typical defect types in batteries.

Furthermore, information about the lighting used when applying the detection algorithm may include information about the location of lighting installation and the type of lighting.

Meanwhile, although not illustrated in FIG. 1, the inspection method according to embodiments of the present invention may further include, in relation to the machine learning model's defect determination, visualizing and outputting a defect determination flow of the machine learning model; and ranking contributions to the defect determination and outputting the visualized defect determination result.

Meanwhile, the machine learning model may be pre-trained using a large amount of training data, including information related to the detection algorithm used to detect the defect candidate shape, location information of defect candidate regions, and shape feature information of the defect candidate regions.

For the defect candidate shape determined as defective (e.g., S210) by the machine learning model, additional defect determination may be performed using the area and length of the shape feature information (S300). In contrast, shapes not determined as defective by the training model are determined as good (S220).

In the additional defect determination process (S300), defects may be determined based on the length and area (or size) of the defect candidate shape. The size of the shape may be determined based on the outer diameter of the maximum circumscribed circle or the area of the defect. Generally, foreign matter or contamination tends to appear darker than its surroundings. Therefore, this characteristic may be utilized to finally determine whether a defect is present by measuring the size and area of the dark area. For example, since scratches and scuff marks have a linear shape, they can be distinguished from foreign substances such as threads by using a linearity factor (struct factor) that quantifies the linear characteristics.

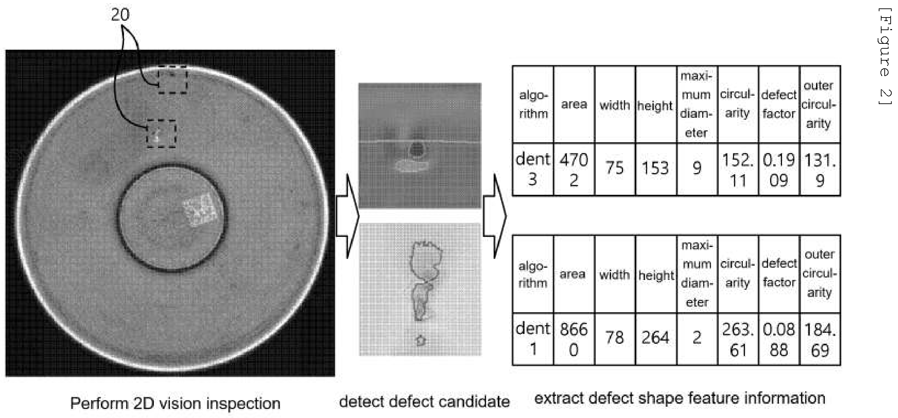

FIG. 2 is a diagram illustrating a process for detecting a defect candidate region and extracting shape feature information according to embodiments of the present invention.

As described above, to detect a defect candidate region according to embodiments of the present invention, an external image of the inspection target may be acquired using an imaging apparatus. One or more rule-based detection algorithms may be used to detect one or more potential candidate regions 20 included in the acquired image. Here, a plurality of detection algorithms may be applied to a single potential candidate region.

The rule-based detection algorithms may include, for example, a dent detection algorithm, a contamination detection algorithm, a scratch detection algorithm, and a leak detection algorithm. The dent detection algorithm may be suitable for detecting defects such as dents or peeling. The contamination detection algorithm may be suitable for detecting various types of contamination. Furthermore, the scratch detection algorithm may be suitable for detecting various types of scratch defects and the leak detection algorithm may be suitable for detecting defects such as liquid leaks.

Multiple detection algorithms may be run on a potential candidate region 20, and if a detection algorithm determines the region as defective, the detection algorithm and shape feature information on the shape detected by the algorithm may be extracted.

Here, shape feature values of the defect candidate region may include the area, width, height, maximum diameter, circularity, defect factor, rectangularity, and struct factor of the shape.

Furthermore, brightness information of the defect candidate region may also be collected during the process of extracting shape feature information. Brightness information may be one of important factors in determining defects, as shape feature values of the defect candidate region may change due to time-dependent change in lighting conditions.

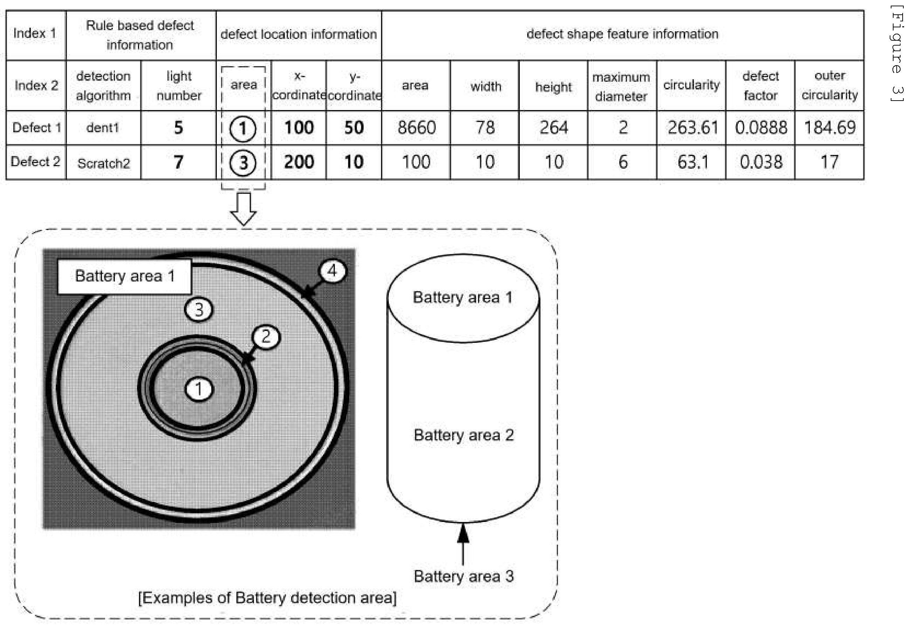

FIG. 3 illustrates an example of training data for a machine learning model according to embodiments of the present invention.

As previously described, the machine learning model according to the present invention may be pre-trained using training data including information related to the detection algorithm, location information of a defect candidate region, and shape feature information for the defect candidate region.

The rule-based algorithm used as the detection algorithm in the present invention may be designed to detect defect types based on the type, depth, length, height, etc. of contamination. The name of the rule-based algorithm used for contamination detection, the location information and feature information of the battery area where the defect occurred, may be used to train the machine learning model, and the trained model may be used to determine the defect, thereby improving the accuracy of the determination.

Here, the battery image may include multiple regions of interest (ROIs) distinguished by shape features. In the example of FIG. 3, the contamination detected area of the battery may include Battery Area 1 related to the top surface of the battery, Battery Area 2 related to the side surface of the battery, and Battery Area 3 related to the bottom surface of the battery.

Here, the type of lighting, which is used during inspection according to conditions such as the position and angle at which the battery is placed and the location of the corresponding battery area, is one of important factors in the detection. The number of lights used for battery inspection may be configured to range from e.g., 5 to 10 according to the battery area, and different lightings may be used for each rule-based algorithm, or for each detection region.

The table in FIG. 3 shows the names of the algorithms and light numbers used for each defect detection. Each light number identifies the location and type of light installed.

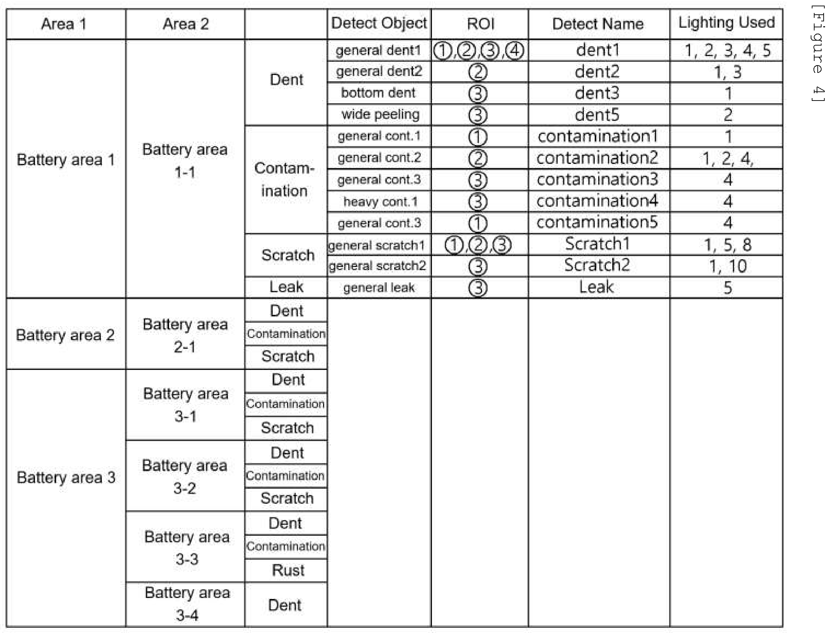

FIG. 4 illustrates an example of a rule-based algorithm used for defect detection according to embodiments of the present invention.

Referring to the table in FIG. 4, the rule-based detection algorithms may include, for example, a dent detection algorithm, a contamination detection algorithm, a scratch detection algorithm, and a leak detection algorithm.

The dent detection algorithm may be suitable for detecting defects such as dents or peeling. Here, the dents may include various types, such as general dents, bottom dents, and wide peelings, and different detection algorithms and lighting may be used for each type of defect. Furthermore, the contamination detection algorithm may be suitable for detecting various types of contamination, such as general contamination and heavy contamination. The scratch detection algorithm may be suitable for detecting various types of scratch defects, and the leak detection algorithm may be suitable for detecting defects such as liquid leaks.

The present invention utilizes detection algorithms and lighting suitable for various defect types, and utilizes information about used detection algorithms and lighting for training a machine learning model, thereby improving defect detection accuracy.

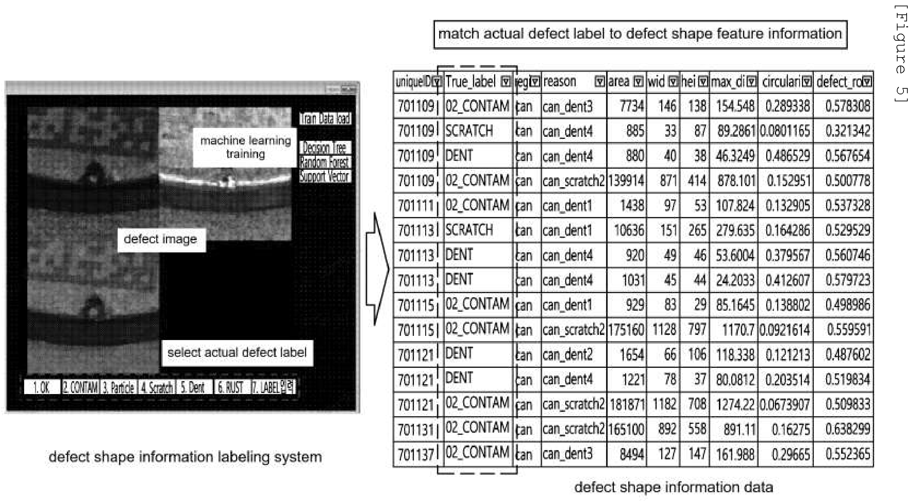

FIG. 5 illustrates an example of label matching, which matches defect shape information with defect type, according to embodiments of the present invention.

The label matching method illustrated in FIG. 5 may be implemented as separate software and performed by a labeling system. The labeling system according to embodiments of the present invention may be implemented in various forms of computing devices. Software implemented to perform labeling according to embodiments of the present invention may be stored in a memory of the labeling system and executed by a processor.

Referring to the left screen of FIG. 5, the labeling system according to embodiments of the present invention may match shape feature information with defect types using images of a defect candidate group captured under various lighting conditions. The labeling system according to embodiments of the present invention may select a defect type (contamination, particle, scratch, dent, or rust) corresponding to a presented defect candidate image (indicated by a unique ID) and label the selected defect type to the shape feature information of each defect candidate image. As previously described, the labeled shape feature information, along with detection algorithm-related information and location information of the defect candidate region, may be used as training data for training a machine learning model.

Meanwhile, the machine learning model according to embodiments of the present invention may include one or more of a decision tree model, a random forest model, and an a support vector model (SVM).

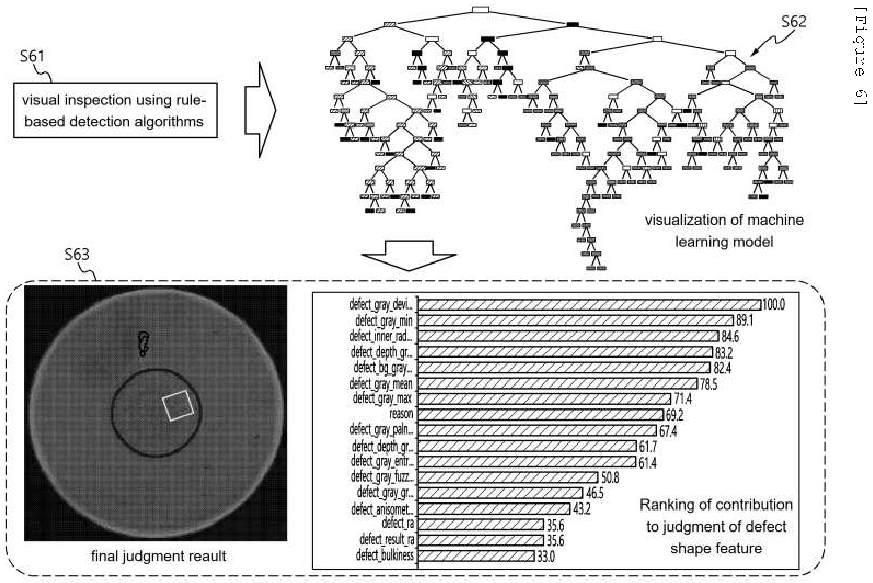

FIG. 6 is a diagram illustrating an example of a defect display method using machine learning among defect detection methods according to embodiments of the present invention.

As previously described, the defect detection method according to embodiments of the present invention may detect one or more defect candidate regions from a preprocessed image using one or more rule-based detection algorithms (using a 2D visual inspector), and extract location information for the defect candidate regions and shape feature information of the defect candidate regions (S61).

The pre-trained machine learning model according to embodiments of the present invention may perform a defect judgment on a corresponding defect candidate shape when the detection algorithm-related information, the location information of a defect candidate region, and the shape feature information for the defect candidate region are input.

Here, embodiments of the present invention may visualize the flow of the machine learning model determining the defect (S62). More specifically, the flow of how defect candidate feature values are classified and judged as defects based on a range of values by the pre-trained machine learning model may be visualized in real time, with some emphasis.

Afterwards, when the defect judgment is completed, the final judgment result may be displayed, in which a certain number of pieces of defect information that contributed highly to a detailed classification process into certain defects during the machine learning assessment process may be graphed and the degree of contribution of each visualized defect shape feature to the defect judgment may be ranked and visualized (S63).

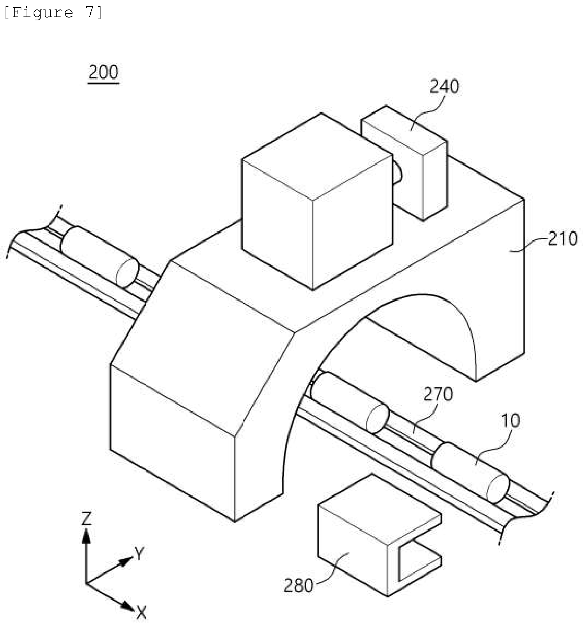

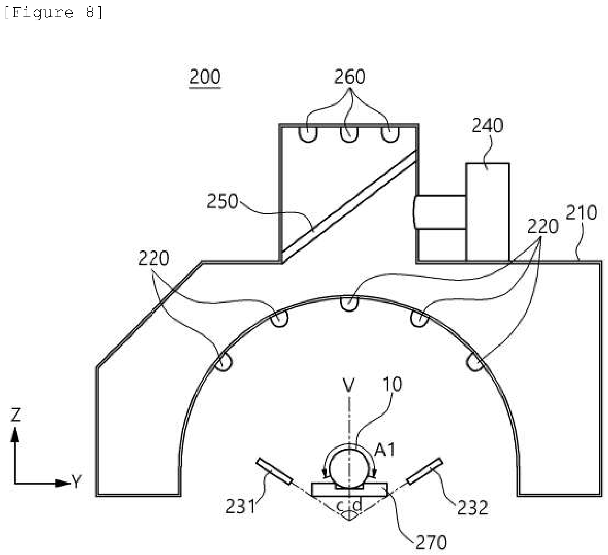

FIG. 7 is a perspective view of an imaging apparatus according to embodiments of the present invention and FIG. 8 is a cross-sectional view of the imaging apparatus according to embodiments of the present invention.

Referring to FIGS. 7 and 8, an imaging apparatus 200 according to embodiments of the present invention may include at least one of a housing 210, a first light 220, a first mirror 231, a second mirror 232, a camera 240, a third mirror 250, a second light 260, a transport means 270, and a reversing means 280.

In the example of FIG. 7, the housing 210 is arranged on a side surface of the battery 10, surrounding at least a first region A1 of the battery 10. For example, as illustrated in FIG. 7, the battery 10 may be arranged in a lying position with its side surface facing upward and the housing 210 may be arranged above the battery 10. The shape of the housing 210 may not be particularly limited, and the inner surface of the housing 210 may have a dome shape.

The first light 220 may be arranged on the inner surface of the housing 210 and irradiate light to the battery 10. In FIG. 8, the first light 220 is illustrated as being arranged to protrude on the inner surface of the housing 210, but the first light 220 may be arranged to be embedded in the inner surface of the housing 210 so that at least a portion of the first light is exposed. In more detail, the first light 220 may irradiate light to the side surface of the battery 10. The first light 220 may irradiate light to the entire area of the first region (A1) of the battery 10. As described above, the inner surface of the housing 210 may have a dome shape and the first light 220 arranged on the inner surface of the housing 210 may be arranged in an overall round shape to irradiate light to the side surface of the battery 10.

The first mirror 231 and the second mirror 232 may be positioned on each side of the battery 10 to reflect a portion of the first area A1 of the battery 10. Referring to FIG. 8, the first mirror 231 may be positioned on the left side of the battery 10 and the second mirror 232 may be positioned at an angle on the right side of the battery 10.

Meanwhile, the camera 240 may capture at least a portion of the first area A1 of the battery 10, the image reflected by the first mirror 231, and the image reflected by the second mirror 232. In other words, the camera 240 may capture at least a portion of the first area (A1) of the battery 10. Here, the portion of the first area (A1) reflected by the first mirror 231 or the second mirror 232 includes all areas of the first area A1 that cannot be captured by the camera 240 if the first mirror 231 or the second mirror 232 were not present. Therefore, by virtue of the presence of the first mirror 231 and the second mirror 232, the image captured by the camera 240 may include an image of the entire area of the first area A1 of the battery 10.

Meanwhile, if the camera 240 is not positioned facing the side of the battery 10 so as to directly capture at least a portion of the first area A1 of the battery 10, the image reflected by the first mirror 231 and the image reflected by the second mirror 232, the imaging apparatus 200 may further include a third mirror 250. Here, the camera 240 indirectly captures at least a portion of the first area A1, the image reflected on the first mirror 231, and the image reflected on the second mirror 232 by capturing the image reflected on the third mirror 250. In other words, the camera 240 captures an image including at least a portion of the first area A1 of the battery 10 reflected on the third mirror 250, the image reflected on the first mirror 231, and the image reflected on the second mirror 232.

The third mirror 250 may be arranged at an angle on the side surface 200S of the battery 10, and reflect at least a portion of the first area (A1) of the battery 10, the image reflected on the first mirror 231, and the image reflected on the second mirror 232. Based on the drawing, the third mirror 250 may be arranged at an angle so as to face between the Y direction (Y) and the Z direction (Z). The third mirror 250 may be positioned so that at least a portion of the first area (A1) of the battery 10, the image reflected on the first mirror 231 and the image reflected on the second mirror 232 are incident and reflected at an angle of approximately 45°. Here, the camera 240 may also be positioned facing the light reflected on the third mirror 250.

Meanwhile, the imaging apparatus 200 may include a second light 260 in addition to the first light 220. The second light 260 may be positioned on the third mirror 250 to irradiate light onto the battery 10 and may be a coaxial light.

Furthermore, the transport means 270 may transport the battery 10 in the axial direction (X) of the battery 10 so that the battery 10 passes through the housing 210. The battery 10 may be transported via the transport means 270, reach an inspection area within the housing 210, and then stop for a predetermined period of time to be photographed by the camera 240, thereby allowing side inspection of the battery 10 to be performed. The inspected battery 10 is then transported to a subsequent process via the transport means 270.

Meanwhile, a reversing means 280 may overturn the battery 10 photographed by the camera 240. The reversing means 280 may rotate the battery 10 by 180°, thereby allowing a side inspection to be performed on the opposite side of the battery 10 where the side inspection was not performed, using the same apparatus as the imaging apparatus 200 described above.

The imaging apparatus 200 according to an embodiment of the present invention may include a first mirror 231 and a second mirror 232, enabling acquisition of an entire image of the first area (A1), which is more than half of the side surface 200S of the battery 10, through a single capture. In other words, visual inspection of the entire side surface of the battery 10 is possible through two inspections on on one side and the other side of the battery 10. Furthermore, sufficient defect visibility can be ensured even in distant areas from the central among the first area (A1) being inspected. This provides an imaging apparatus capable of performing a side surface inspection without rotating or rolling a cylindrical battery. Furthermore, an imaging apparatus capable of preventing image noise and improving image quality and the detection capability of the inspection apparatus can be provided.

Meanwhile, the imaging apparatus according to the embodiments described in FIGS. 7 and 8 has a structure suitable for inspecting the side surface of a battery and is presented as an example of an imaging apparatus according to embodiments of the present invention.

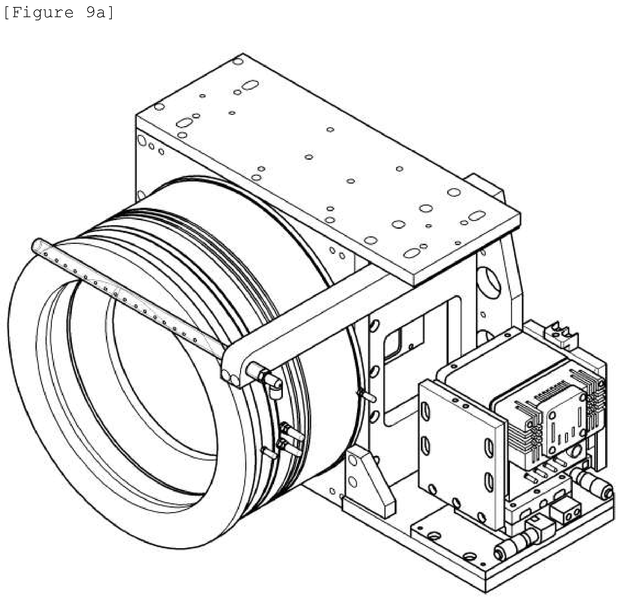

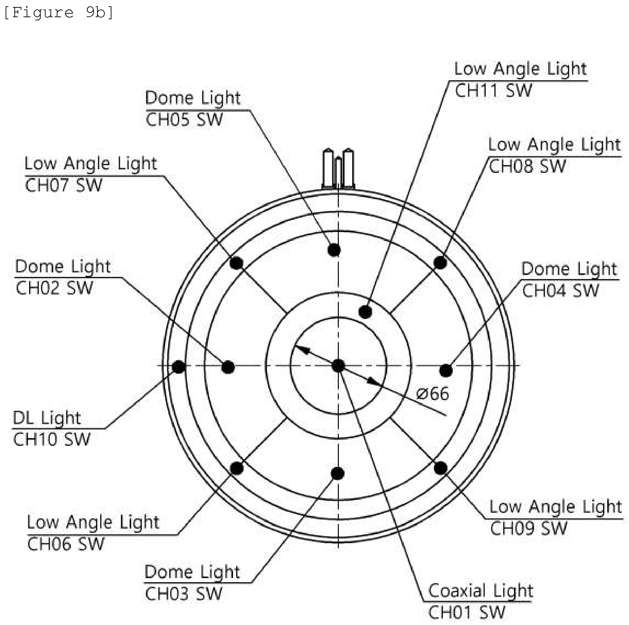

FIG. 9a is a drawing illustrating the exterior of an imaging apparatus according to another embodiment of the present invention and FIG. 9b is a multi-channel lighting configuration diagram of the imaging apparatus according to another embodiment of the present invention.

The imaging apparatus illustrated in FIG. 9a is configured to be suitable for acquiring images of the top and bottom surfaces of a battery, such as the rivet and vent portions of a battery cell. Using a multi-illumination device, as illustrated in FIG. 9b, various images may be acquired under various lighting conditions. Here, the multi-illumination device may include, for example, dome lighting, low-angle lighting, coaxial lighting, ring lighting, and dark field lighting. As described, the imaging apparatus according to embodiments of the present invention may include a structure for capturing images of various parts of a battery cell, such as the upper and lower surfaces of the battery, and the side surfaces of the battery.

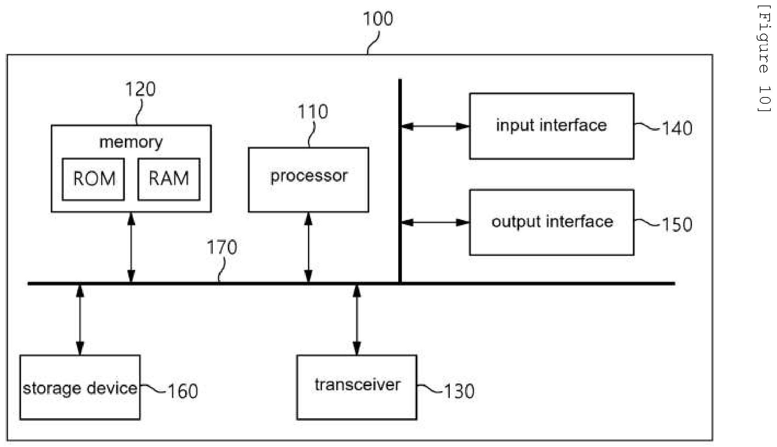

FIG. 10 is a block diagram of a battery inspection apparatus according to embodiments of the present invention.

The battery inspection apparatus 100 according to embodiments of the present invention may include at least one processor 110, a memory 120 storing at least one command executed by the processor, and a transceiver 130 connected to a network to perform communication.

The at least one instruction may include an instruction to acquire and preprocess an image capturing an appearance of at least a portion of the battery; an instruction to detect one or more defect candidate regions from the preprocessed image using one or more detection algorithms; an instruction to extract location information of the defect candidate regions and shape feature information of the defect candidate regions; and an instruction to input detection algorithm related information, location information of the defect candidate regions, and shape feature information of the defect candidate regions into a pre-trained machine learning model to perform a defect determination for a corresponding defect candidate shape.

The shape feature information of the defect candidate regions may include one or more of area, length, diameter, defect factor, and circularity of each defect candidate shape.

The detection algorithm related information may include the type of detection algorithm used to detect the defect candidate regions; and information about lighting used when applying the detection algorithm.

The machine learning model may be pre-trained using training data including the detection algorithm related information, location information of the defect candidate regions, and shape feature information of the defect candidate regions.

The shape feature information used as training data may be matched to a label of a defect type for a corresponding shape.

The detection algorithm may be a rule-based algorithm and include one or more of a dent detection algorithm, a contamination detection algorithm, a scratch detection algorithm, and a leak detection algorithm.

The at least one instruction may further include an instruction to visualize and output a defect determination flow of the machine learning model; and an instruction to rank contributions to the defect determination and visualizing and outputting the defect determination result.

The machine learning model may include one or more of a decision tree model, a random forest model, and a Support Vector Model (SVM).

The information about the lighting may include information about location where the lighting is installed and the type of lighting.

The at least one instruction may further include an instruction to perform a final defect determination using area and length of feature information about the defect candidate shape determined as defective by the machine learning model.

The battery inspection apparatus according to embodiments of the present invention may be connected to or include an imaging apparatus configured to capture the appearance of a target object. The imaging apparatus according to embodiments of the present invention may be provided in a form identical or similar to the devices illustrated in FIGS. 7, 8, 9a, and 9b.

The battery inspection apparatus according to embodiments of the present invention may also interoperate with or include the labeling system according to embodiments of the present invention, as described with reference to FIG. 5, for example.

Furthermore, the battery inspection apparatus 100 according to embodiments of the present invention may further include an input interface device 140, an output interface device 150, a storage device 160, etc. Respective components included in the battery inspection apparatus 100 may be connected by a bus 170 and can communicate with each other.

The storage device 160 may store at least one image produced at each stage of the inspection method according to embodiments of the present invention, such as a plurality of images captured by the imaging device, images preprocessed and postprocessed images from the captured images. The images stored in the storage device 160 may be provided to the at least one processor 110 when necessary during execution of the inspection method according to embodiments of the present invention.

Here, the processor 110 may mean a central processing unit (CPU), a graphics processing unit (GPU), or a dedicated processor on which methods according to embodiments of the present invention are performed. The memory (or storage unit) may include at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A method for inspecting quality of a battery during a manufacturing process of the battery, comprising:
acquiring and preprocessing an image capturing an appearance of at least a portion of the battery;
detecting one or more defect candidate regions from the preprocessed image using one or more detection algorithms;
extracting location information of the defect candidate regions and shape feature information of the defect candidate regions; and
inputting detection algorithm related information, location information of the defect candidate regions, and shape feature information for the defect candidate regions into a pre-trained machine learning model to perform a defect determination for a corresponding defect candidate shape.

2. The method of claim 1, wherein the shape feature information of the defect candidate regions includes one or more of the following:
area, length, diameter, defect factor, and circularity of each defect candidate shape.

3. The method of claim 1, wherein the detection algorithm related information includes:
the type of detection algorithm used to detect the defect candidate regions; and
information about lighting used when applying the detection algorithm.

4. The method of claim 1, wherein the machine learning model is pre-trained using training data including the detection algorithm related information, location information of the defect candidate regions, and shape feature information of the defect candidate regions.

5. The method of claim 4, wherein the shape feature information used as training data is matched to a label of a defect type for a corresponding shape.

6. The method of claim 1, wherein the detection algorithm is a rule-based algorithm and includes one or more of a dent detection algorithm, a contamination detection algorithm, a scratch detection algorithm, and a leak detection algorithm.

7. The method of claim 1, further comprising:
visualizing and outputting a defect determination flow of the machine learning model; and
ranking contributions to the defect determination and visualizing and outputting the defect determination result.

8. The method of claim 1, wherein the machine learning model includes one or more of a decision tree model, a random forest model, and a Support Vector Model (SVM).

9. The method of claim 3, wherein the information about the lighting includes information about location where the lighting is installed and the type of lighting.

10. The method of claim 1, further comprising:
performing a final defect determination using area and length of feature information about the defect candidate shape determined as defective by the machine learning model.

11. An apparatus for inspecting quality of a battery during a manufacturing process of the battery, the apparatus comprising:
at least one processor; and
a memory configured to store at least one instruction executed by the at least one processor,
wherein the at least one instruction includes:
an instruction to acquire and preprocess an image capturing an appearance of at least a portion of the battery;
an instruction to detect one or more defect candidate regions from the preprocessed image using one or more detection algorithms;
an instruction to extract location information of the defect candidate regions and shape feature information of the defect candidate regions; and
an instruction to input detection algorithm related information, location information of the defect candidate regions, and shape feature information for the defect candidate regions into a pre-trained machine learning model to perform a defect determination for a corresponding defect candidate shape.

12. The apparatus of claim 11, wherein the shape feature information of the defect candidate regions includes one or more of the following:
area, length, diameter, defect factor, and circularity of each defect candidate shape.

13. The apparatus of claim 11, wherein the detection algorithm related information includes:
the type of detection algorithm used to detect the defect candidate regions; and
information about lighting used when applying the detection algorithm.

14. The apparatus of claim 11, wherein the machine learning model is pre-trained using training data including the detection algorithm related information, location information of the defect candidate regions, and shape feature information of the defect candidate regions.

15. The apparatus of claim 14, wherein the shape feature information used as training data is matched to a label of a defect type for a corresponding shape.

16. The apparatus of claim 11, wherein the detection algorithm is a rule-based algorithm and includes one or more of a dent detection algorithm, a contamination detection algorithm, a scratch detection algorithm, and a leak detection algorithm.

17. The apparatus of claim 11, wherein the at least one instruction further includes:
an instruction to visualize and output a defect determination flow of the machine learning model; and
an instruction to rank contributions to the defect determination and visualizing and outputting the defect determination result.

18. The apparatus of claim 11, wherein the machine learning model includes one or more of a decision tree model, a random forest model, and a Support Vector Model (SVM).

19. The apparatus of claim 13, wherein the information about the lighting includes information about location where the lighting is installed and the type of lighting.

20. The apparatus of claim 11, wherein the at least one instruction further includes:
an instruction to perform a final defect determination using area and length of feature information about the defect candidate shape determined as defective by the machine learning model.
